# EUROPEAN PATENT APPLICATION

(11) **EP 0 838 298 A2**
(43) Date of publication of application: **29.04.1998**
(21) Application number: 97118363.7
(22) Date of filing: 22.10.1997
(51) Int. Cl.: B23K 9/10

(54) **Welding power supply**

(30) Priority: 24.10.1996 DE 19644279
(71) Applicant: MICROTRONIC Microelectronic Vertriebs GmbH, D-84494 Neumarkt-Sankt Veit (DE)
(72) Inventor: Eggelaar, Josef A., 84494 Neumarkt St.-Veit (DE)
(74) Representative: Kirschner, Klaus Dieter, Dipl.-Phys.

(57) **Zusammenfassung**

Eine Starkstrom-Schweißvorrichtung weist einen Schweißstromgenerator (2) und mehrere Schweißelektrodenpaare (4, 4') auf. Eine elektronische Schweißstrom-Umschalteinrichtung (6) schaltet den Schweißstrom zwischen den mehreren Schweißelektrodenpaaren um. Die Schweißstrom-Umschalteinrichtung (6) weist mehrere Umschalter (8) auf, die ihrerseits aus einer Vielzahl von Schaltelementen aufgebaut sind. Ein Steuerpulsgeber schaltet nacheinander die Umschalter in den leitenden Zustand, so daß das entsprechende Schweißelektrodenpaar (4, 4') mit Strom versorgt wird.

## Description

Die Erfindung betrifft eine Starkstrom-Schweißvorrichtung mit einem Schweißstromgenerator und wenigstens einem Schweißelektrodenpaar.

Bei Starkstrom-Schweißvorrichtungen ist es bisher üblich, für jedes Schweißelektrodenpaar, d. h. für jede Schweißstelle, einen Schweißstromgenerator vorzusehen. Wenn an einem Werkstück mehrere Schweißungen durchgeführt werden müssen, hat man daher mehrere Schweißstromgeneratoren und zugehörige Schweißköpfe benötigt. Von einer Umschaltung zwischen mehreren Schweißköpfen und einem Schweißstromgenerator hat man bisher abgesehen, weil man eine mechanische Umschaltung des Schweißstroms für baulich zu aufwendig und steuerungstechnisch zu langsam hielt, während eine elektronische Umschaltung des Schweißstroms wegen zu teuerer Schaltungskomponenten für diesen Zweck nicht in Frage kam. Daher bestand das Problem, daß die Kosten für die Schweißvorrichtung sich proportional zu der Zahl der erforderlichen Schweißungen erhöht hat.

Der Erfindung liegt demgegenüber die Aufgabe zugrunde, eine Starkstrom-Schweißvorrichtung anzugeben, mit der mehrere Schweißungen nacheinander unter Verwendung von nur einem Schweißstromgenerator durchgeführt werden können.

Dazu ist die erfindungsgemäße Starkstrom-Schweißvorrichtung mit einem Schweißstromgenerator und wenigstens einem Schweißelektrodenpaar gekennzeichnet durch mehrere Schweißelektrodenpaare und eine elektronische Schweißstellen-Umschalteinrichtung, mit der Schweißstrom zwischen den Schweißelektrodenpaaren umschaltbar ist. So können Schweißungen an mehreren Schweißstellen hintereinander durchgeführt werden, wobei der Schweißstrom von einem einzigen Schweißstromgenerator geliefert wird.

In vorteilhafter Weise steuert die Schweißstrom-Umschalteinrichtung die Durchschaltung des Schweißstromes zu jeweils einer Elektrode der Elektrodenpaare.

In vorteilhafter Weise weist die Schweißstrom-Umschalteinrichtung mehrere, beispielsweise fünf, separate Umschalter auf, die nacheinander zur Durchführung der beispielsweise fünf Schweißungen durchschaltbar sind. Durch die modulare Bauweise der Schweißstrom-Umschalteinrichtung kann die Schweißstrom-Umschalteinrichtung in einfacher Weise auf die Zahl der Schweißstellen abgestimmt werden. Mit anderen Worten können in einem gewissen Rahmen eine Vielzahl von Schweißstellen versorgt werden.

In vorteilhafter Weise weist jeder Umschalter eine Parallelschaltung von mehreren Schaltelementen auf, die von einem Steuerpulsgeber gemeinsam durchschaltbar sind. Damit ist es möglich, die Umschalter aus verhältnismäßig preiswerten Bauelementen aufzubauen, da jedes Schaltelement nur ein Bruchteil des Schweißstromes führen muß.

In vorteilhafter Weise sind die Schaltelemente MOSFET'S, die für verhältnismäßig große Ströme von beispielsweise 10 A preiswert erhältlich sind.

In vorteilhafter Weise ist die Vorrichtuing dadurch gekennzeichnet, daß der Steuerpulsgeber die Vielzahl der Umschalter dadurch umschaltet, daß die Schaltelemente eines bestimmten Umschalters gemeinsam und die Umschalter (8) nacheinander angesteuert werden. Der Steuerpulsgeber kann somit in vorteilhafter Weise die Schaltelemente von mehreren Umschaltern nacheinander ansteuern, d. h. der Steuerpulsgeber bedient sämtliche Umschalter nacheinander, was ebenfalls zur Preisreduzierung der Vorrichtung beiträgt.

Schließlich kann in vorteilhafter Weise eine Überspannungsschaltung mit einem Thyristor und einer Zenerdiode vorgesehen sein, um den Umschalter vor einer übermäßigen Belastung zu schützen.

Ein Ausführungsbeispiel der Erfindung wird nun anhand der beiliegenden Zeichnungen beschrieben. Es zeigen:
- Fig. 1: eine schematische Gesamtansicht der Starkstrom-Schweißvorrichtung gemäß der Erfindung; und
- Fig. 2: die schematische Darstellung eines Umschalters mit seinem Anschluß an einen Steuerpulsgeber.

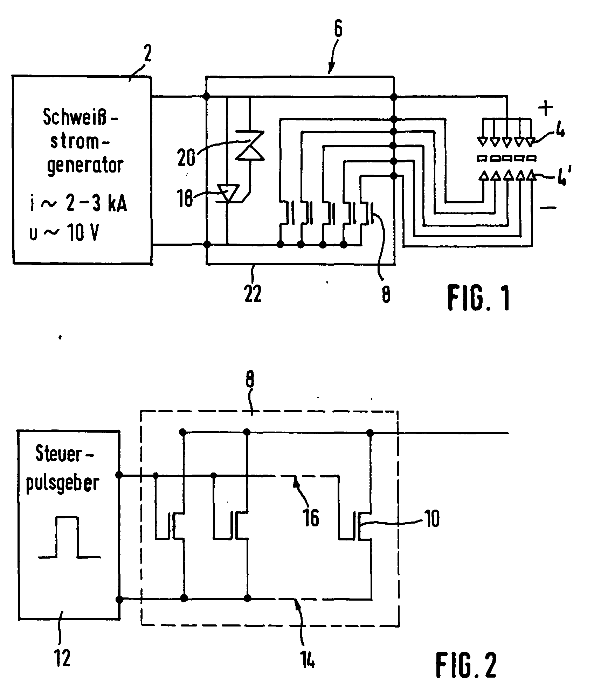

Die Starkstrom-Schweißvorrichtung gemäß Fig. 1 weist einen Schweißstromgenerator 2, mehrere Schweißelektrodenpaare 4, 4' und eine elektronische Schweißstrom-Umschalteinrichtung 6 auf, mit der der Schweißstrom zwischen den Schweißelektrodenpaaren umschaltbar ist.

Die Schweißstrom-Umschalteinrichtung 6 steuert die Durchschaltung des Schweißstromes zu jeweils einer Elektrode, der Minus-Elektrode, der Elektrodenpaare 4, 4'. In dem Ausführungsbeispiel gemäß Fig. 1 weist die Schweißstrom-Umschalteinrichtung 6 fünf Umschalter 8 auf, die nacheinander zur Durchführung von bspw. fünf Schweißungen durchschaltbar sind.

Jeder Umschalter 8 weist eine Parallelschaltung von mehreren Schaltelementen 10 auf, die von einem Steuerpulsgeber 12 gemeinsam durchschaltbar sind. Die Schaltelemente 10 bestehen aus MOSFET'S, d. h. Halbleiterbauelementen, die im nicht angesteuerten Zustand einen nahezu unendlichen Widerstand und im angesteuerten Zustand einen Widerstand nahezu gleich Null haben. Wenn die Schaltelemente 10 von einem Impuls von dem Steuerpulsgeber 12 leitend geschaltet werden, kann daher der Schweißstrom durch den entsprechenden Umschalter 8 zu der zugehörigen Elektrode 4' fließen. Der Steuerpulsgeber 12 schaltet also nacheinander die Umschalter 8 in den leitenden Zustand, so daß das entsprechende Schweißelektrodenpaar (4, 4') mit Strom versorgt wird.

Durch die gestrichelte Linie bei 14, 16 ist angedeutet, daß eine große Anzahl von Schaltelementen parallel geschaltet werden können, um den Umschalter 8 einerseits mit preiswerten Bauelementen verwirklichen zu können und um andererseits die erforderlichen Schweißströme von 2 bis 3kA bei einer Spannung von etwa 10 V verwirklichen zu können. Wenn die Schaltelemente 10 beispielsweise mit 10 A belastet werden können, wären 200 Schaltelemente erforderlich, um 2 kA zu führen. Eine derartige Zahl von Schaltelementen ist jedoch immer noch preiswerter als eine geringere Zahl von entsprechend teureren Schaltelementen, weil die Kosten für diese Schaltelemente überproportional mit der möglichen Stromaufnahme steigen.

In der Schweißstrom-Umschalteinrichtung ist schließlich eine Überspannungsschaltung aus einem Thyristor 18 und einer Zenerdiode 20 vorgesehen, um eine Überbelastung der Schalter 8 zu vermeiden.

Die Schweißstrom-Umschalteinrichtung 6 weist ein Gehäuse 22 auf, in dem die Umschalter 8 und die Überspaunungsschutzschaltung untergebracht sind. Die Kabelverbindungen mit dem Schweißstromgenerator einerseits und den Schweißköpfen andererseits erfolgt über Hochstrom-Stecker und -Buchsen, so daß eine entsprechende Sicherheit gewährleistet ist.

## Patentansprüche

1. Starkstrom-Schweißvorrichtung mit einem Schweißstromgenerator und wenigstens einem Schweißelektrodenpaar, **gekennzeichnet durch** mehrere Schweißelektrodenpaare (4, 4') und eine elektronische Schweißstrom-Umschalteinrichtung (6), mit der der Schweißstrom zwischen den Schweißelektrodenpaaren (4, 4') umschaltbar ist.

2. Vorrichtung nach Anspruch 1, **dadurch gekennzeichnet, daß** die Schweißstrom-Umschalteinrichtung (6) die Durchschaltung des Schweißstromes zu jeweils einer Elektrode (4, 4') der Elektrodenpaare (4, 4') steuert.

3. Vorrichtung nach Anspruch 1 oder 2, **dadurch gekennzeichnet, daß** die Schweißstrom-Umschalteinrichtung (6) mehrere, beispielsweise fünf Umschalter (8) aufweist, die nacheinander zur Durchführung von beispielsweise fünf Schweißungen durchschaltbar sind.

4. Vorrichtung nach Anspruch 3, **dadurch gekennzeichnet, daß** jeder Umschalter (8) eine Parallelschaltung von mehreren Schaltelementen (10) aufweist, die von einem Steuerpulsgeber (12) gemeinsam durchschaltbar sind.

5. Vorrichtung nach Anspruch 4, **dadurch gekennzeichnet, daß** die Schaltelemente (10) MOSFET'S sind.

6. Vorrichtung nach Anspruch 4 oder 5, **dadurch gekennzeichnet, daß** der Steuerpulsgeber die Vielzahl der Umschalter (8) dadurch umschaltet, daß die Schaltelemente (10) eines bestimmten Umschalters (8) gemeinsam und die Umschalter (8) nacheinander angesteuert werden.

7. Vorrichtung nach einem der vorhergehenden Ansprüche, **gekennzeichnet durch** eine Überspannungsschutzschaltung mit einem Thyristor (18) und einer Zenerdiode (20).
